# EUROPÄISCHE PATENTANMELDUNG

(11) **EP 0 644 441 A2**
(43) Veröffentlichungstag der Anmeldung: **22.03.1995**
(21) Anmeldenummer: 94710005.3
(22) Anmeldetag: 03.08.1994
(51) Int. Cl.: G02B 6/28, G02B 6/12, G02F 1/313

(54) **Integriert optischer 2 x 2 Koppler**

(30) Priorität: 17.09.1993 DE 4331611
(71) Anmelder: IOT Integrierte Optik GmbH, D-07745 Jena (DE)
(72) Erfinder: Wolf, Barbara, D-76709 Kronau (DE); Fabricius, Norbert, Dr., D-68766 Hockenheim (DE); Dehm, Michael, D-75045 Walzbachtal 2 (DE); Foss, Wolfgang, D-73431 Aalen (DE)

(57) **Zusammenfassung**

Integriert optischer asymmetischer 2 x 2 Koppler mit geraden unter dem Winkel Φ aufeinander zulaufenden Eingangswellenleitern (21,22) verschiedener Propagationskonstante bzw. Breite (w₁,w₂). Die minimale Stegbreite S ist ca. 4 µm. Die stumpf anschließenden Ausgangswellenleiter (23,24) sind gleich breit (w₀) und sie verlaufen in Kreisbögen. Beide Richtungen äquivalent. Dämpfung an Zwickel bei Kreuzung vermieden. Bögen in schmalem Wellenleiter (21) sind vermieden.

Verwendung z.B. in Verzweigern, insbesondere 2 x N-Verzweigern, und in Mach-Zehnder-Duplexer.

## Beschreibung

Die Erfindung betrifft einen integriert optischen 2 x 2 Koppler mit zwei sich einander adiabatisch annähernden Eingangswellenleitern mit unterschiedlicher Propagationskonstante und zwei Ausgangswellenleitern mit untereinander gleicher Propagationskonstante.

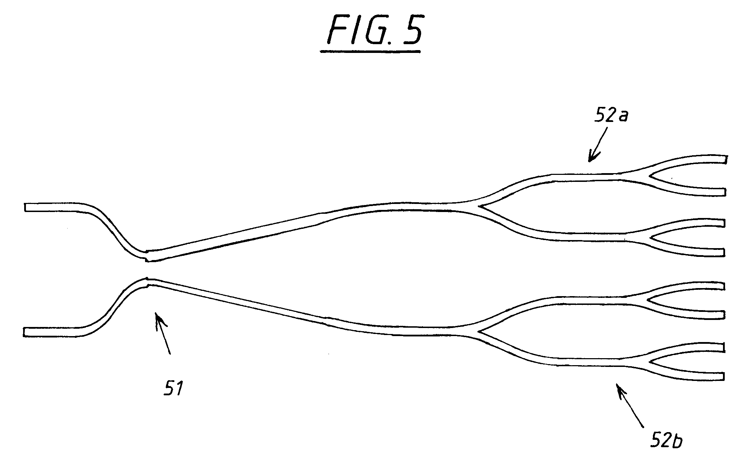

Solche Koppler sind aus US-Z C.P. Hussell et al., Applied Optics 29 No. 28, (01.10.1990), Seiten 4105-4110 (Fig. 5) bekannt. Die Funktion von Eingangs- und Ausgangswellenleitern kann auch vertauscht sein, wie beschrieben in US 4 850 666. Dort ist auch ausgesagt, daß ein solcher Verzweiger in beiden Richtungen betrieben werden kann. Die Propagationskonstante wird jeweils durch die Breite der Wellenleiter bestimmt. In einem Kreuzungsbereich sind alle Wellenleiter vereinigt. Die Umlenkung der Wellenleiter zu parallelem Verlauf ist nur schematisch dargestellt. Maßnahmen zum Übergang auf einheitliche Wellenleiter-Dimensionen an den Anschlüssen des integriert-optischen Bausteins sind nicht beschrieben.

Für eine Anordnung entsprechend dem US-Patent US 4 850 666 gibt US-Z A. Tervonen et al., Proc. SPIE 1513 (1991), Seite 71-75 (Fig. 1) an, daß die beiden gleich breiten Wellenleiter in S-Bögen zur Kopplungsstelle geführt werden.

Die typischen Kreuzungswinkel sind sehr spitz, typisch kleiner als 0,2°. Die im Kreuzungsbereich auftretenden Spitzen (Herzstücke) des die Wellenleiter umgebenden Materials sind nicht ideal herstellbar. Bei mit Photolithographie und Ionenaustausch in Glas hergestellten vergrabenen Wellenleitern ist ein Zwickel (stumpfes Ende) der Spitze von mindestens 0,5 µm Breite nicht zu vermeiden. Dadurch werden relativ hohe Verluste verursacht.

Für einen symmetrischen 2 x 2 Koppler mit relativ großem Kreuzungswinkel von 5° bis 10° wird in US 4 961 619 ein Zwickel jedoch ausdrücklich eingeführt, in Folge von und kombiniert damit, daß sich alle gleich breiten Wellenleiter im Kreuzungsbereich verjüngen, wodurch insgesamt Verluste vermindert werden.

Ein kreuzungs- und berührungsloser asymmetrischer 2 x 2 Koppler ist aus US-Z A. Takagi et al., J. Lightwave Technology 10 No. 6, (Juni 1992), Seiten 735-746 (Fig. 7) bekannt.

Dabei werden gleich breite Wellenleiter durch S-Kurven aus Kreisbögen in einer Wechselwirkungsregion nah parallel zusammengebracht. Ein Wellenleiter verjüngt sich hier und wird nach einer S-Kurve mit einem Taper wieder auf die Normalbreite gebracht. Die Kurve im schmalen Wellenleiter führt zu erhöhter Dämpfung und verringert die spektrale Bandbreite.

Eine bei Takagi a.a.O. als "uniform asymmetrisch" beschriebene Variante ist auch aus DE-Z S.-P. Chen, Frequenz 45 (1991), Seiten 225-232 bekannt. Zwei Wellenleiter werden in S-Kurven auf Minimalabstand gebracht und nach kurzer paralleler Strecke wieder durch S-Kurven getrennt. Statt der Kurven sind bei Chen auch Knicke vorgesehen. Die beiden Wellenleiter haben auf ganzer Länge gleiche, untereinander jedoch unterschiedliche Breiten und/oder Brechungsindices.

Die Aufgabe der Erfindung ist es, einen gattungsgemäßen 2 x 2 Koppler mit einer Geometrie anzugeben, die eine Verringerung von Lichtverlusten ergibt und insbesondere für die Herstellung mit Photolithographie und Ionenaustausch in Glas geeignet ist.

Gelöst wird die Aufgabe durch einen Koppler gemäß Anspruch 1.

Eine solche Struktur des Kopplers ist herstelltechnisch sicher, insbesondere mit photolithographischen Masken und Ionenaustausch ohne störende Formmängel oder Formunsicherheiten und dadurch bedingte Lichtverluste zu erzeugen. Bei sehr kleinem Winkel 2 Φ zwischen den Eingangswellenleitern, was die adiabatische Überkopplung ermöglicht, wird eine relativ kurze Baulänge durch sofort kreisförmig auseinanderlaufenden Ausgangswellenleiter gesichert. Die Lichtfortpflanzungsrichtung ist dabei beliebig, Ein- und Ausgang können vertauscht sein. Vorzugsweise werden die Propagationskonstanten der Wellenleiter durch unterschiedliche Breiten, also nur durch die Strukturbreite der Photomaske im Herstellprozeß, bestimmt. Der Abstand der Mitten der Wellenleiter ist dabei überall größer als der Mittelwert der Breite der benachbarten Wellenleiter, insbesondere mehr als 0,5 µm größer. Damit sind die Wellenleiter sicher berührungs- und kreuzungsfrei. Im Herstellprozeß schwierige freie dünne Spitzen der Photomaske sind vermieden und die Stegbreite zwischen den Wellenleitern ist herstelltechnisch gut beherrschbar.

Überraschend wurde gefunden, daß die Eingangs- und Ausgangswellenleiter zentriert stumpf aneinander stoßen können, daß insbesondere bei Herstellung mittels Photolithographie und Ionenaustausch in einem Glassubstrat die stumpfen Übergänge soweit stufenförmig ausgebildet werden können, wie dies das Auflösungsvermögen des Herstellprozesses zuläßt. Taper, die einen stetigen Querschnittswandler ergeben, erübrigen sich in dem Bereich, in dem die Lichtwellenfelder der beiden benachbarten Wellenleiter sich überlagern und die Kopplung stattfindet. Damit sind einfache Masken und kurze Bauform möglich.

Der Winkel zwischen den Eingangswellenleitern ist unter Berücksichtigung des Unterschieds der beiden Propagationskonstanten so gering, daß adiabatische Überkopplung der Lichtwellen erfolgt, d.h. kleiner als 1°, vorzugsweise kleiner als 0,2°. Genaue Werte sind durch bekannte Näherungs- und Simulationsverfahren z.B. aus den zitierten Schriften für die Parameter (z.B. Bandbreite, Material) des konkreten Kopplers zu bestimmen.

Die erfindungsgemäße Ausführung eines Kopplers eignet sich ohne weiteres für die in der Nachrichtentechnik regelmäßig geforderte optische Bandbreite größer als 200 nm, z.B. von 1,3 µm bis 1,55 µm Wellenlänge.

Gemäß den Ansprüchen 10, 11 und 12 eignen sich erfindungsgemäße Koppler auch besonders zur Bildung von Mehrfach-Kopplern mit vor- oder nachgeschalteten Kopplern oder Verzweigern und als Verzweiger mit einem offen belassenen Eingang. Mit einer einheitlichen Struktur können also beliebige Koppler- und Verzweigerarchitekturen ausgeführt werden.

Als Eingangselement eines 2 x N-, insbesondere eines 2 x 8-Kopplers gemäß Anspruch 13 eignet sich der erfindungsgemäße Koppler besonders.

Auch als Koppler für einen asymmetrischen Mach-Zehnder-Demultiplexer gemäß Anspruch 14 eignet sich der erfindungsgemäße Koppler hervorragend. Diese Verwendung wird auch in der gleichzeitig mit der europäischen Patentanmeldung eingereichten deutschen Patentanmeldung mit dem Titel "Integriert-optischer Demultiplexer" des gleichen Anmelders und der Erfinder Fabricius und Wolf, welche hiermit als Ganzes Teil dieser Anmeldung wird, ausführlich beschrieben.

Im folgenden wird die Erfindung anhand der Zeichnung näher erläutert.

Es zeigen:
- Fig. 1: eine schematische Aufsicht auf ein vorteilhaftes Ausführungsbeispiel eines erfindungsgemäßen 2 x 2 Kopplers;
- Fig. 2a-d: ein Diagramm einer Simulationsrechnung, das den Verlauf der Lichtintensität über Länge und Breite des Beispiels der Fig. 1 darstellt;
- Fig. 3: eine schematische Darstellung eines Mehrfachkopplers, in dem ein erfindungsgemäßer 2 x 2 Koppler mit als Verzweiger verwendeten 2 x 2 Kopplern kombiniert ist.
- Fig. 4: einen Mach-Zehnder-Demultiplexer mit erfindungsgemäßem asymmetrischem 2 x 2 Koppler;
- Fig. 5: ein 2 x 8 Koppler, an dessen Eingang ein erfindungsgemäßer 2 x 2 Koppler vorgesehen ist.

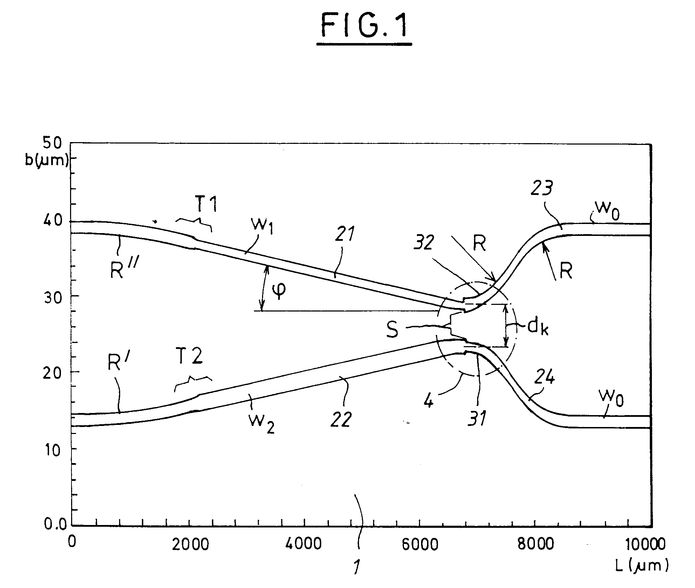

Das Ausführungsbeispiel gemäß Figur 1 zeigt in Aufsicht einen Ausschnitt eines Glassubstrats (1) von b = 50 µm Breite und 1 = 10.000 µm Länge mit einem um etwa das 120-fache vergrößerten Breitenmaßstab. Darin sind mittels Photolithographie und Ionenaustausch vergrabene Wellenleiter (21, 22, 23, 24) erzeugt, und zwar Eingangswellenleiter (21, 22) und Ausgangswellenleiter (23, 24).

An den Einkoppelstellen (E1, E2) am Rand des Ausschnitts des Glassubstrats (1) beginnen die Eingangswellenleiter (21, 22) mit einer Breite von 1,5 µm parallel, durchlaufen Kreisbögen mit Radien R', R'' und anschließend Taper T1, T2 mit denen der Übergang auf die reduzierte Breite w₁ = 1,1 µm des schmalen Eingangswellenleiters (21) und die vergrößerte Breite w₂ = 1,9 µm des breiten Eingangswellenleiters (22) erzeugt werden. Anschließend laufen die beiden Eingangswellenleiter (21, 22) unter dem halben Öffnungswinkel Φ = 0,1° aufeinander zu. Der Winkel Φ muß so klein sein, daß die bei Annäherung der beiden Eingangswellenleiter (21, 22) im Wechselwirkungsbereich (4) auftretende Überkopplung adiabatisch, ohne Abstrahlung nach außen und ohne Wechselwirkung der beiden lokalen Moden, verläuft.

Durch Verlängern der unter dem Winkel Φ aufeinander zulaufenden Teile der Eingangswellenleiter (21, 22) werden auch größere Abstände der Einkoppelstellen E1, E2 möglich. Abstände von mehreren Millimetern, wie sie aus Gründen der leichteren Montage und Handhabung zum Teil benötigt werden, lassen sich durch S-Bögen zwischen den Einkoppelstellen El, E2 und den Tapern T1, T2 kompakt realisieren.

Besonders in kaskadenartigen Kombinationsanordnungen mehrerer 2 x 2 Koppler können auch Taper T1, T2 und die Kreisbögen mit den Radien R', R" fortfallen. Somit kann die Anordnung verkürzt und verlustärmer gemacht werden.

Die beiden Eingangswellenleiter (21, 22) kommen sich in einem Wechselwirkungsbereich (4) bis auf einen Koppelabstand dₖ von 5 µm (gemessen Mitte-Mitte der Wellenleiter) und damit bis auf eine Stegbreite S von ca. 4 µm nahe. Der Koppelabstand ist auch um ca. ± 1 µm variierbar. Diese Stegbreite ist im Herstellungsprozeß sicher beherrschbar. Die Eingangswellenleiter (21, 22) gehen am nächsten Punkt nebeneinander stumpf in die Ausgangswellenleiter (23, 24) mit der einheitlichen Breite w₀ von 1,5 µm über.

Da alle Wellenleiter (21, 22, 23, 24) simultan in einem Verfahren erzeugt werden, ist die Breite w₀, w₁, w₂ der weitaus dominierende Faktor, der die Propagationskonstanten in den Wellenleitern (21, 22, 23, 24) bestimmt. Der Übergang der Wellenleiter (21, 23) bzw. (22, 24) erfolgt mittenzentriert und mit einer Stufe, die durch die Auflösung des Lithographie- und Ionenaustauschverfahrens in ihrer Steilheit begrenzt ist.

Der Übergang ist jedoch knickfrei und die erforderliche Richtungsänderung zum Auseinanderführen der Ausgangswellenleiter (23, 24) wird durch unmittelbar an die Stufe anschließende Kreisbögen mit Radius R verlustarm und bei günstiger Baulänge erreicht. Der Radius R ist zur Verlustminderung größer als etwa 80 mm, im Beispiel 90 mm.

Um parallelen Verlauf der Ausgangswellenleiter (23, 24) an der Kante des Substrats (1) zu erhalten, der für die Ankopplung weiterer optischer Elemente in der Regel erforderlich ist, sind Gegenbögen mit vorzugsweise gleich großem Radius R angesetzt. Dabei können Zwischengeraden vorgesehen sein. Der Abstand der Ausgangswellenleiter (23, 24) an der Kante kann durch Wahl der Radien, der Bogenlängen usw. bedarfsgerecht bis zu einigen Millimetern eingestellt werden.

Bögen in Wellenleitern haben generell gegenüber Geraden größere Dämpfung und engere spektrale Bandbreite, und zwar verschärft durch abnehmende Breite. Die erfindungsgemäße Anordnung, bei der Bögen nur in Abschnitten mit der Breite w₀ und gleichen Radien jeweils in den beiden Eingangs- (21, 22) und Ausgangswellenleitern (23, 24) vorkommen, wird also eine geringe und für alle Lichtwege gleichmäßige Dämpfung und eine ebenfalls gleichmäßige große spektrale Bandbreite des 2 x 2 Kopplers erreicht.

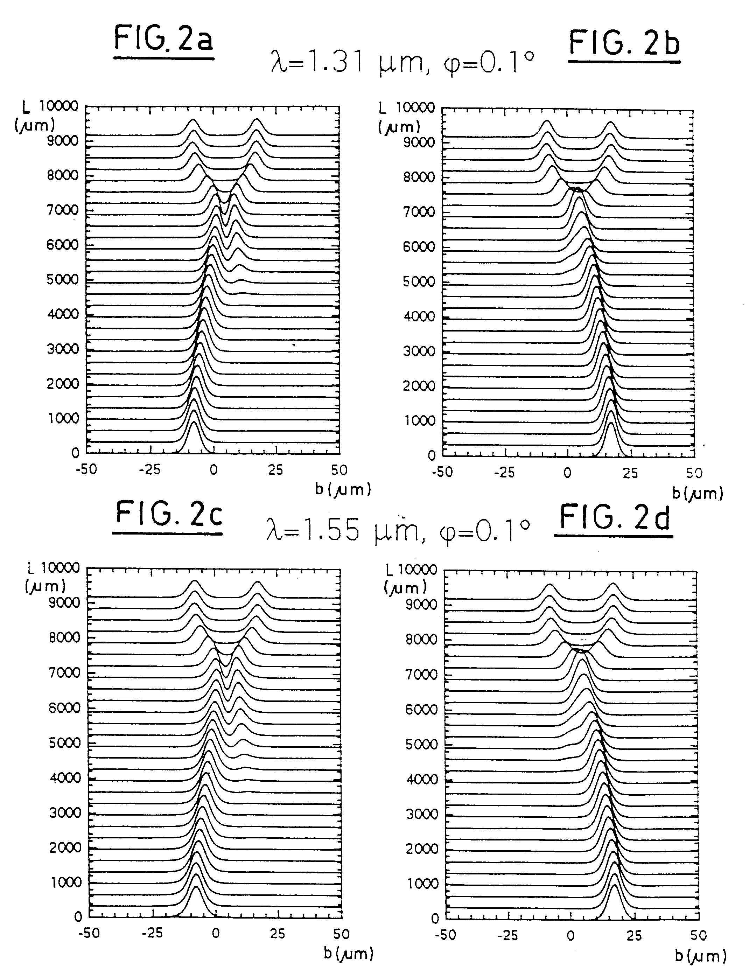

Figur 2 zeigt für das Ausführungsbeispiel der Figur 1 den Verlauf der adiabatischen Überkopplung mit der folgenden gleichmäßigen Verteilung der Eingangsintensität auf die beiden Ausgänge, und zwar für eine Lichtwellenlänge Lambda = 1,31 µm in a) für Einkopplung in den Eingangswellenleiter (21) (schmal) und in b) für Einkopplung in den Eingangswellenleiter (22) (breit). In c) und d) ist für eine zweite in der optischen Nachrichtentechnik verbreitete Wellenlänge Lambda = 1,55 µm nochmals das gleiche dargestellt.

Bei Einkopplung in den schmalen Eingangswellenleiter (21) (a, c) ist das Bild im Wechselwirkungsbereich (4) gegenüber der Einkopplung in den breiten Eingangswellenleiter (22) (b, d) sehr verschieden. Am Ausgang, wo die Ausgangswellenleiter (23, 24) getrennt sind, zeigt sich aber eine sehr gleichmäßige Verteilung der Intensität auf die beiden Ausgangswellenleiter (23, 24).

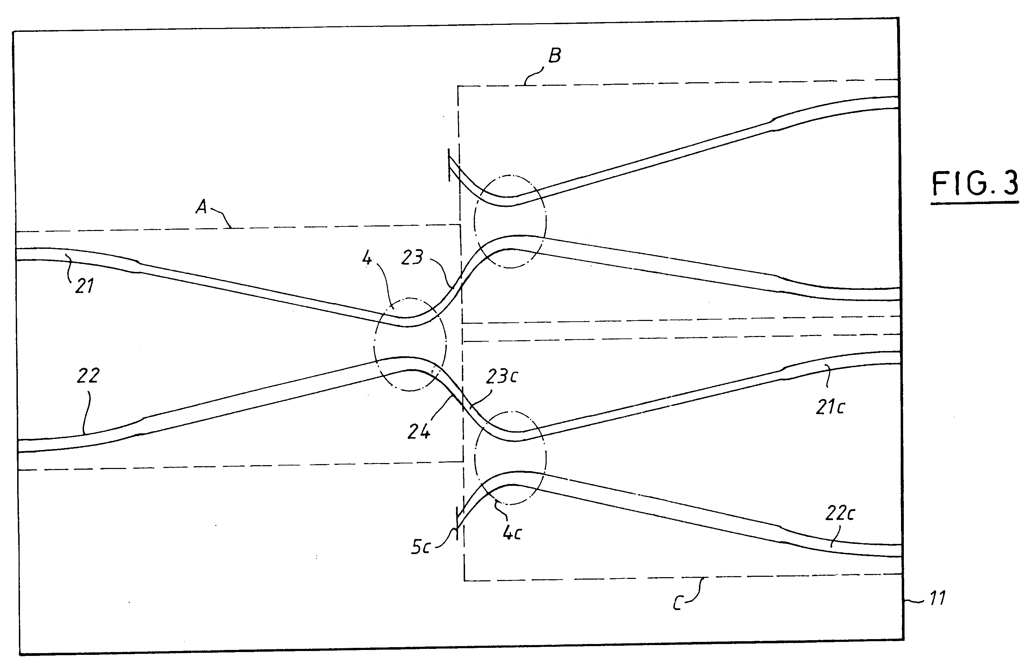

Figur 3 gibt schematisch ein Beispiel für die Verwendungsmöglichkeiten des erfindungsgemäßen 2 x 2 Kopplers. Auf einem Substrat (11) sind drei 2 x 2 Koppler A, B, C angeordnet und bilden einen 2 x 4 Koppler. An den Ausgangswellenleiter (24) des Kopplers A schließt der Ausgangswellenleiter (23c) (über den genau so gut eingekoppelt werden kann) des nur als Verzweiger benutzten Kopplers C, dessen zweiter Ausgangswellenleiter (24c) daher mit einem geeigneten Abschluß (5c) versehen ist. Wechselwirkungsbereich (4c) und Eingangswellenleiter (21c, 22c) sind wie in Figur 1 ausgebildet. An den Ausgangswellenleiter (23) des Kopplers A schließt der zu C spiegelbildliche Koppler B an.

Um kompakte Abmessungen und geringe Dämpfung zu erhalten, sind die Ausgangswellenleiter von A, B und C direkt nach dem jeweils ersten Kreisbogen miteinander verbunden, so daß zwischen zwei Wechselwirkungsbereichen (4, 4c) nur ein einfacher S-Bogen liegt.

Alternativ können zwei in einer Kaskade aufeinanderfolgende 2 x 2 Koppler mit den jeweils gleich breiten Eingangswellenleitern ohne Taper und Bögen in einander übergehen.

Der Kombination, auch auf einem einheitlichen Substrat, untereinander und mit anderen integriert-optischen Komponenten, der erfindungsgemäßen 2 x 2 Koppler sind keine Grenzen gesetzt.

An vier Musterexemplaren eines 2 x 2 Kopplers nach Figur 1 mit den genannten Daten wurden die in der Tabelle angegebenen Werte für die Gleichmäßigkeit der Verteilung auf die beiden Ausgänge und für die über den Verlust in einem Wellenleiter durch die Verteilung auf zwei Wellenleiter zwangsläufige Intensitäts-Halbierung (3dB) hinausgehende Dämpfung (excess loss) gemessen, und zwar jeweils für beide Lichtflußrichtungen von einem Eingangswellenleiter (21, 22) zu den Ausgangswellenleitern (23, 24) und umgekehrt.

**Tabelle**

| | | | |
|---|---|---|---|
| Wellenlänge [µm] | 1,31 | 1,55 | 1,2 - 1,6 |
| Gleichmäßigkeit [dB] | 0,09 ± 0,06 | 0,22 ± 0,11 | max. 0,65 |
| zusätzl.Verlust [dB] | 0,67 ± 0,12 | 0,82 ± 0,13 | max. 1,3 |

Man sieht, daß insbesondere bei den in der optischen Nachrichtentechnik wichtigen Wellenlängen 1,31 µm und 1,55 µm sehr gute Qualität erreicht wird.

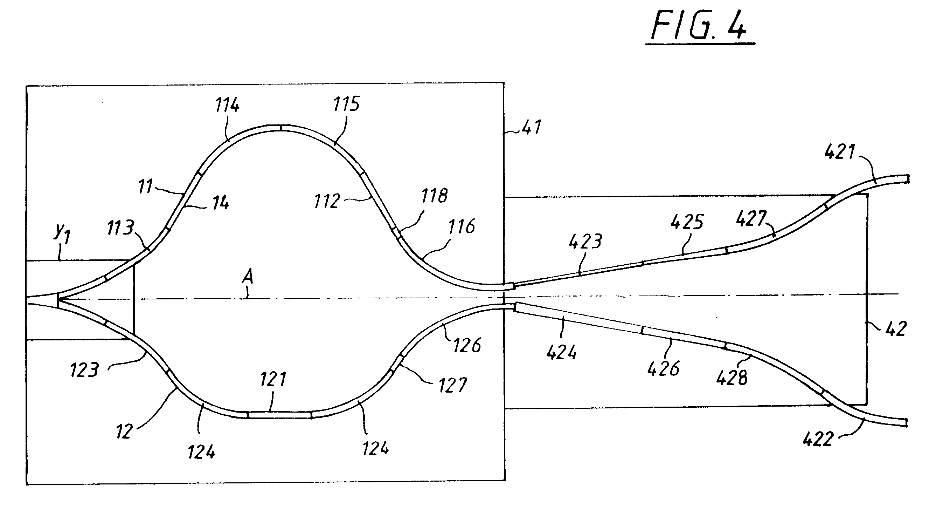

Fig. 4 zeigt einen Mach-Zehnder-Duplexer, wie er im Prinzip z.B. aus EP 0 482 461 bekannt ist, mit einem Mach-Zehnder-Interferometer (41) mit zwei Lichtwegen 11, 12 mit unterschiedlicher geometrischer Weglänge, einem Y-Verzweiger Y₁ an dessen Eingang und einem erfindungsgemäßen asymmetrischen 2 x 2 Koppler (42) am Ausgang. In der Funktion als Demultiplexer wird das (von links) eintretende Licht je nach seiner Wellenlänge in einen der beiden Ausgangskanäle 421,422 eingekoppelt. In umgekehrter Richtung ist die Anordnung ein Multiplexer. Als weitere Besonderheit entspricht jedem Bogenstück 113, 114, 115, 116 des ersten Arms 11 ein an der Achse A gespiegeltes Bogenstück 123, 124, 125, 126. Der Unterschied der geometrischen wie der optischen Weglänge der beiden Arme 11, 12 resultiert daher nur aus der unterschiedlichen Gesamtlänge der geraden Stücke 111, 112, 118 bzw. 121, 117 in den beiden Armen 11 bzw. 12. Der erfindungsgemäße abrupte Übergang der Wellenleiterbreite im Koppelbereich erfolgt hier direkt am Ende der letzten Bogenstücke 116, 126 des Mach-Zehnder-Interferometers 41. Der breite Wellenleiter 424 und der schmale Wellenleiter 423 sind über Taper 426, 425 an die Bögen 428, 422 und 427, 421 angeschlossen, mit welchen der benötigte Abstand der Ausgangswellenleiter 421, 422 hergestellt wird.

Figur 5 zeigt den erfindungsgemäßen 2 x 2 Koppler (51) als Teilelement eines 2 x N Verzweigers, im konkreten Fall N = 8. Eine solche Struktur entsteht, wenn an jedem der beiden Ausgänge ein 1 x N/2 Verzweiger (52a, 52b) angeschlossen wird. In der Zeichnung ist der 2 x 2 Koppler nur schematisch dargestellt.

Solche Strukturen sind wichtige Komponenten von nachrichtentechnisch genutzten Netzwerken. Dort können sie herkömmliche 1 x N Verzweiger ersetzen, wobei der zweite Eingang als Ersatz für einen eventuellen defekten ersten Eingang oder als Eingang für Referenzsignale zur Fehlersuche oder als Erweiterungsmöglichkeit des bestehenden Netzwerkes mit anderen Wellenlängen dienen kann.

## Patentansprüche

1. Integriert optischer 2 x 2 Koppler mit zwei sich einander adiabatisch annähernden Eingangswellenleitern (21, 22) mit unterschiedlicher Propagationskonstante und zwei Ausgangswellenleitern (23, 24) mit untereinander gleicher Propagationskonstante, dadurch gekennzeichnet, daß die zwei Eingangswellenleiter (21, 22) schräg, gerade und knickfrei in den Wechselwirkungsbereich führen, daß ohne Berührung der zwei Eingangswellenleiter (21, 22) diese je in einen Ausgangswellenleiter (23, 24) übergehen und die Ausgangswellenleiter (23, 24) anschließend in Kreisbögen auseinander geführt sind.

2. Koppler nach Anspruch 1, dadurch gekennzeichnet, daß die Lichtfortpflanzung wahlweise von den Ausgangswellenleitern (23, 24) zu den Eingangswellenleitern (21, 22) oder auch umgekehrt erfolgt.

3. Koppler nach Anspruch 1 oder 2, dadurch gekennzeichnet, daß die Propagationskonstanten der Wellenleiter (21, 22, 23, 24) durch ihre Breiten (w₀, w₁, w₂) bestimmt sind.

4. Koppler nach Anspruch 1, 2 oder 3, dadurch gekennzeichnet, daß der Abstand der Mitten der Wellenleiter überall größer als der Mittelwert der Breite der benachbarten Wellenleiter ist.

5. Koppler nach Anspruch 4, dadurch gekennzeichnet, daß der Abstand mindestens um 0,5 µm größer als der Mittelwert ist.

6. Koppler nach mindestens einem der Ansprüche 3-5, dadurch gekennzeichnet, daß die Eingangs- und Ausgangswellenleiter (21, 22, 23, 24) zentriert stumpf aneinander anstoßen.

7. Koppler nach mindestens einem der Ansprüche 1-6, dadurch gekennzeichnet, daß die Wellenleiter (21, 22, 23, 24) mittels Photolithographie und Ionenaustausch in einem Glassubstrat (1) hergestellt sind und die stumpfen Übergänge von den Eingangs- (21, 22) zu den Ausgangswellenleitern (23, 24) soweit stufenförmig ausgebildet sind, wie dies die Auflösung des Herstellprozesses zuläßt.

8. Koppler nach mindestens einem der Ansprüche 1-7, dadurch gekennzeichnet, daß die Eingangswellenleiter (21, 22) zunächst parallel mit gleichen Propagationskonstanten verlaufen, durch Kreisbögen die adiabatische geradlinige Annäherung eingeleitet wird und durch anschließende Taper T₁, T₂ die ungleichen Propagationskonstanten herbeigeführt werden.

9. Koppler nach mindestens einem der Ansprüche 1-8, dadurch gekennzeichnet, daß die adiabatische Annäherung mit einem Winkel (2 Φ) zwischen den Eingangswellenleitern (21, 22) kleiner als 1°, vorzugsweise etwa 0,2° erfolgt.

10. Koppler nach mindestens einem der Ansprüche 1-9, dadurch gekennzeichnet, daß seine optische Bandbreite größer als 200 nm ist.

11. Verwendung eines Kopplers nach mindestens einem der Ansprüche 1-10, mit vor- oder nachgeschalteten Kopplern oder Verzweigern in einem Mehrfach-Koppler.

12. Verwendung eines Kopplers nach mindestens einem der Ansprüche 1-10 mit einem offenen Eingangs- (21, 22) oder Ausgangswellenleiter (23, 24) als 1 x 2 Verzweiger.

13. Verwendung eines Kopplers nach Anspruch 11, dadurch gekennzeichnet, daß durch Nachschalten zweier 1x N-Verzweiger (52a, b) ein 2 x N-, insbesondere ein 2 x 8-Koppler gebildet wird. (Fig. 5)

14. Verwendung eines Kopplers nach mindestens einem der Ansprüche 1 bis 10 als Ausgangskoppler (42) eines asymmetrischen Mach-Zehnder-Duplexers, insbesondere in einer Ausführung, bei der ein erster Arm (11) des Mach-Zehnder-Interferometers (41) aus Bogenstücken (113, 114, 115, 116) und geraden Stücken (111, 112, 118) besteht und der zweite Arm (12) zu jedem Bogenstück (113, 114, 115, 116) des ersten Arms (11) ein spiegelbildliches Bogenstück (123, 124, 125, 126) enthält und die Gesamtlänge der geraden Stücke (111, 112, 118) des ersten Arms (11) größer als die Gesamtlänge der geraden Stücke (121, 127) des zweiten Arms (12) ist.
